(19) Europäisches Patentamt
European Patent Office
Office européen des brevets

(11) **EP 2 688 754 B1**

(12) **FASCICULE DE BREVET EUROPEEN**

(45) Date de publication et mention de la délivrance du brevet:
**13.05.2015 Bulletin 2015/20**

(21) Numéro de dépôt: **12709334.2**

(22) Date de dépôt: **21.03.2012**

(51) Int Cl.:
**B60C 11/12** *(2006.01)*    **B60C 11/04** *(2006.01)*

(86) Numéro de dépôt international:
**PCT/EP2012/054946**

(87) Numéro de publication internationale:
**WO 2012/130675 (04.10.2012 Gazette 2012/40)**

(54) **BANDE DE ROULEMENT OPTIMISÉE EN USURE POUR PNEU DE POIDS LOURD ET MÉTHODE D'OPTIMISATION**

VERSCHLEISSOPTIMIERTE LAUFFLÄCHE FÜR DEN REIFEN EINES SCHWERLASTFAHRZEUGES UND OPTIMIERUNGSVERFAHREN

WEAR-OPTIMIZED TREAD FOR A HEAVY-VEHICLE TIRE, AND OPTIMIZATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2011 FR 1152509**

(43) Date de publication de la demande:
**29.01.2014 Bulletin 2014/05**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeur: **LHOSPITALIER, Sylvie**
**F-63040 Clermont-Ferrand cedex 9 (FR)**

(74) Mandataire: **Diernaz, Christian**
**M. F. P. Michelin,**
**23, place des Carmes Dechaux,**
**DGD/PI-F35-Ladoux**
**63040 Clermont-Ferrand Cedex 09 (FR)**

(56) Documents cités:
**EP-A1- 0 384 182     WO-A1-02/055324**

**Description**

*DOMAINE DE L'INVENTION*

La présente invention se rapporte aux bandes de roulement pour pneumatiques destinés à équiper l'essieu avant des véhicules de transport et plus particulièrement des véhicules poids lourd, susceptibles d'effectuer de longs trajets à vitesse soutenue.

*ÉTAT DE LA TECHNIQUE*

Ces pneumatiques comportent une armature de carcasse comprenant une pluralité de renforts disposés radialement, cette armature de carcasse étant elle-même surmontée d'une armature de sommet s'étendant dans les directions transversale (dite aussi axiale) et circonférentielle (dite aussi longitudinale). Cette armature de sommet est composée d'au moins deux nappes superposées les unes sur les autres, chaque nappe étant formée d'un mélange de gomme renforcé par une pluralité de câbles ou fils peu extensibles, de préférence en acier, disposés parallèlement les uns aux autres dans une même nappe et suivant une direction faisant un angle au plus égal à 40 degrés avec la direction circonférentielle, les câbles d'une nappe à l'autre étant croisés entre eux. Cette armature de sommet peut être complétée, d'une part par une nappe complète ou deux demi nappes comprenant des câbles peu extensibles faisant avec la direction circonférentielle un angle compris entre 45 degrés et 80 degrés, d'autre part par au moins une nappe formée de câbles dits "élastiques" placés radialement à l'extérieur des nappes de sommet dont les câbles de renfort font un angle inférieur à 40°. D'autres nappes de renforcement peuvent être employées selon le besoin.

L'armature de sommet est par ailleurs surmontée radialement à l'extérieur par une bande de roulement réalisée avec au moins une composition à base de caoutchouc dont la partie radialement la plus à l'extérieur du pneumatique forme une surface de roulement destinée à venir en contact avec une chaussée pendant le roulage de ce pneumatique monté sur un véhicule.

Pour obtenir une performance d'adhérence satisfaisante en roulage sur une chaussée recouverte d'eau, cette bande de roulement est pourvue sur sa surface extérieure, dans le cas de pneumatiques destinés à l'équipement de l'essieu avant directeur de véhicules poids lourd, avec une pluralité de rainures d'orientation générale circonférentielle. Ces rainures forment dans la bande une sculpture comportant une pluralité de nervures continues, chaque nervure ayant une face de contact radialement à l'extérieur (cette face de contact formant une partie de la surface de roulement de la bande de roulement) et des parois latérales pouvant être sensiblement perpendiculaires à la face de contact de la nervure ou bien pouvant faire un angle de dépouille non nul avec cette face de contact. Pour améliorer encore la performance en adhérence, il est connu de pourvoir certaines des nervures d'une bande de roulement avec une pluralité de rainures et/ou d'incisions d'orientation transversale ou sensiblement transversale (c'est-à-dire avec un angle au plus égal à 45 degrés avec la direction transversale ou axiale). Ces découpures transversales et les rainures longitudinales délimitent une pluralité de motifs présentant au cours du roulage un bord ou arête d'attaque, c'est-à-dire une arête venant en contact avec la chaussée avant le reste de la surface de contact de chaque motif, et une arête de fuite. Par ailleurs, ces mêmes nervures et motifs ont des arêtes orientées circonférentiellement, ces arêtes jouant un rôle important lors des manoeuvres de virage.

À l'usage en clientèle, on a pu constater qu'il pouvait apparaître des usures dites "irrégulières" car se développant d'une façon non homogène sur l'ensemble de la surface de roulement en contact avec une chaussée.

On a, par exemple, pu observer l'apparition au voisinage des bords de fuite d'une usure irrégulière plus prononcée que sur le reste de la bande de roulement. Pour résoudre ce problème il a été proposé une solution décrite dans la demande de brevet publiée sous le numéro WO 2002-055324.

Un autre type d'usure irrégulière a pu être observée sur des pneus pour essieux directeurs et selon laquelle, les arêtes longitudinales des nervures épaules (par nervures épaule il faut entendre ici les deux nervures délimitant axialement la bande de roulement) présentent des zones d'usure plus prononcées que le reste de ces nervures.

Pour réduire ces usures irrégulières, apparaissant sur les nervures épaule, il a été proposé dans le brevet EP-0384182-B1 de pourvoir uniquement les autres nervures centrale et intermédiaires d'une bande de roulement avec une pluralité d'incisions inclinées d'un même sens d'inclinaison afin d'adapter en roulage les longueurs de mise à plat de chaque nervure centrale et intermédiaires. Par nervure centrale, on entend la nervure traversée par le plan équatorial du pneu et par nervure intermédiaire toutes nervure située entre une nervure épaule et la nervure centrale. S'il n'y a pas de nervure centrale, on considère qu'il n'y a que des nervures intermédiaires.

Selon ce document de brevet, les incisions dont sont pourvues les nervures centre et intermédiaires sont transversales et sensiblement parallèles entre elles, ces incisions étant inclinées d'un angle compris entre 5° et 25° par rapport à une direction perpendiculaire à la surface de roulement de la bande de roulement de sorte que la force résultante exercée, en roulage dans la zone de contact avec le sol, par le sol sur la bande de roulement tende à redresser les incisions vers une inclinaison nulle par rapport à ladite direction perpendiculaire. Il est à noter que sur l'essieu avant directeur, en moyenne non soumis à une force résultante de type moteur, les pneus sont soumis à une force résultante globale qui a tendance à freiner le véhicule et qui est dirigée dans la direction opposée à la direction du déplacement du véhicule.

Si les enseignements du document WO 2002-055324 et de celui de EP-0384182-B1 permettent l'obtention d'un pneu poids lourd pour essieu directeur aux performances améliorées en usure irrégulière, il faut ici reconnaître que l'évolution des véhicules poids lourd et l'augmentation permanente du besoin en terme de performance pneu ont conduit les déposants à entreprendre des études pour obtenir encore une amélioration de ces pneus en usure et notamment en usure irrégulière sur les arêtes longitudinales des nervures intermédiaires.

Définitions :

Une nervure est un élément en relief formé sur une bande de roulement, cet élément étant délimité par deux rainures d'orientation circonférentielle. Une nervure comprend deux parois latérales et une face de contact, cette dernière étant destinée à venir en contact avec la chaussée.

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Par direction radiale, on entend une direction qui est perpendiculaire à l'axe de rotation du pneu (cette direction correspond à la direction de l'épaisseur de la bande de roulement).

Par direction axiale ou transversale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

On désigne par le terme générique de découpure soit une rainure soit une incision, l'une ou l'autre étant obtenue par moulage ou par une opération d'entaillage. Une découpure correspond à l'espace délimité par des parois de matière se faisant face et distantes l'une de l'autre d'une distance non nulle. Ce qui différencie une incision d'une rainure c'est précisément cette distance séparant les parois en vis-à-vis ; dans le cas d'une incision, cette distance est appropriée pour permettre au moins partiellement la mise en contact des parois opposées lors du passage dans le contact avec la chaussée. Cette distance pour une incision est ici préférentiellement au plus égale à 2 millimètres (mm). Dans le cas d'une rainure, les parois de cette rainure ne peuvent pas venir en contact l'une contre l'autre dans les conditions usuelles de roulage.

La direction principale d'une incision sur la surface de roulement correspond à la direction moyenne passant par les points les plus éloignés de l'incision sur la surface de roulement de la bande à l'état neuf non usé.

La direction secondaire d'une incision est définie comme la direction perpendiculaire à la direction principale d'une incision et s'étendant le long de l'incision dans l'épaisseur de la bande.

*BREF EXPOSÉ DE L'INVENTION*

La présente invention vise à améliorer les performances en usure et plus précisément les performances en usure irrégulière sur les nervures épaule et les nervures intermédiaires des pneus pour essieu avant directeur de véhicules poids lourd tout en obtenant une même vitesse d'usure pour toutes les nervures, ces améliorations de performance conférant au pneu une durée de vie augmentée par rapport au pneu de l'art antérieur décrit notamment dans EP-0384182-B1.

A cet effet, l'invention a pour objet une bande de roulement pour pneumatique destiné à équiper un essieu d'un véhicule poids lourd, ce pneumatique comportant une armature de carcasse radiale surmontée d'une armature de sommet, cette bande comprenant au moins quatre rainures d'orientation générale circonférentielle délimitant une pluralité de nervures comprenant deux nervures épaule délimitant axialement la bande et des nervures intermédiaires ainsi qu'une nervure centrale, les nervures intermédiaires et centrale étant pourvues chacune avec une pluralité d'incisions ayant une largeur inférieure à 2 mm, et d'orientation générale transversale, ces incisions étant inclinée d'un angle moyen par rapport à une direction perpendiculaire à la surface de roulement de la bande à l'état neuf, cet angle moyen étant au moins égal à 5 degrés et orienté de façon que la force résultante exercée en roulage dans la zone de contact avec la chaussée par ladite chaussée sur la bande tend à redresser les incisions vers un angle moyen nul par rapport à cette même direction perpendiculaire, cette bande de roulement étant caractérisée en ce que les relations suivantes sont satisfaites :

$$0{,}660 \langle Ai * Ac \langle 0{,}755$$

$$0,835 \langle \frac{Ai}{Ae} \langle 0,910$$

les coefficients *Ae, Ai* et *Ac* étant calculés, respectivement, pour chaque nervure épaule, chaque nervure intermédiaire et pour la nervure centrale, en utilisant les formules suivantes :

$$Aj = AXj * AYj$$

avec :

$$AXj = \frac{1}{1 + \frac{1}{3}\left( \frac{PSj}{pj - (EpLj + PLj * \tan ALPHAj)} \right)^2}$$

et

$$AYj = \frac{1}{1 + \frac{1}{3}\left( \frac{PSj}{Lrj} \right)^2}$$

l'indice j prenant la valeur c pour la nervure centrale, la valeur i pour chaque nervure intermédiaire, la valeur e pour chaque nervure épaule, et avec :

PSj : hauteur de la nervure d'indice j,
Lrj : largeur de la nervure d'indice j,
PLj : profondeur moyenne des incisions de la nervure d'indice j,
EpLj : largeur moyenne des incisions de la nervure d'indice j,
pj : pas moyen des incisions de la nervure d'indice j,
ALPHAj : angle d'inclinaison des incisions de la nervure d'indice j.

La hauteur PSj d'une nervure d'indice j est prise comme la moyenne des profondeurs des rainures délimitant ladite nervure d'indice j. Pour la nervure épaule, cette hauteur est égale à la profondeur de la rainure séparant cette nervure épaule de la nervure intermédiaire axialement la plus proche.
Le signe "*" employé plus haut indique une opération de multiplication.
Toutes les valeurs citées ci-dessus renvoient à des dimensions prises sur la bande de roulement à l'état neuf c'est-à-dire avant tout roulage.
Selon une variante de l'invention, la bande de roulement est telle que la relation suivante est en outre satisfaite :

$$0,780 \langle Ai * Ae \langle 0,845$$

De façon préférentielle, le pas des incisions sur les nervures va en diminuant en allant des nervures épaules à la nervure centrale. Ainsi en augmentant le nombre d'incisions sur les nervures proches de la partie centrale de la bande de roulement, il est possible d'augmenter le pouvoir moteur des nervures axialement à l'extérieur.
De façon préférentielle, la largeur moyenne des incisions de chaque nervure augmente en allant des nervures épaule vers la nervure centrale. Ainsi en augmentant la largeur des incisions sur la partie centrale de la bande de roulement, il est possible d'augmenter le pouvoir moteur des nervures axialement à l'extérieur.
Avantageusement, une bande de roulement selon l'invention est utilisée avec un pneumatique destiné à équiper l'essieu avant directeur d'un véhicule poids lourd.

Dans le cas où la bande de roulement présente plus d'une nervure intermédiaire entre la nervure centrale et la nervure épaule, on applique les relations données précédemment à la nervure intermédiaire axialement la plus proche de la nervure épaule.

Dans certaines applications, il peut être nécessaire de moduler la diminution de rigidité liée à la présence d'incisions sur les nervures intermédiaires en prévoyant que la profondeur des incisions est variable d'un côté à l'autre desdites nervures. Préférentiellement, la profondeur de ces incisions des nervures intermédiaires est moindre du côté de la rainure délimitant la nervure épaule. On forme ainsi une sorte de pontage entre les parois en vis-à-vis délimitant chaque incision, ce pontage étant plus haut du côté de la nervure épaule et allant en diminuant vers le plan équatorial du pneu. Préférentiellement, la hauteur maximale de ce pontage est au plus égale à 45% de la hauteur de la nervure dans laquelle sont formées les incisions ayant ce pontage, la hauteur de la nervure étant égale à la profondeur des rainures longitudinales la délimitant. Dans une telle configuration, les incisions de chaque nervure intermédiaire ont des profondeurs qui varient entre une profondeur maximale et une profondeur minimale, la profondeur minimale étant au moins égale à 55% de la hauteur PSi de la nervure intermédiaire.

Dans un pareil cas, la profondeur de l'incision des nervures intermédiaires à prendre en compte dans le calcul des coefficients *Ae, Ai* et *Ac* est une profondeur moyenne obtenue comme étant la profondeur d'une incision ayant un pontage de hauteur constante et de même surface que le pontage considéré.

En outre, l'invention a pour objet une méthode d'optimisation d'une bande de roulement pour pneu destiné à un essieu directeur d'un véhicule poids lourd selon laquelle on construit une bande de roulement avec au moins quatre rainures d'orientation circonférentielle délimitant une pluralité de nervures comprenant deux nervures épaule délimitant axialement la bande et des nervures intermédiaires ainsi qu'une nervure centrale, les nervures intermédiaires et centrale étant pourvues chacune avec une pluralité d'incisions ayant une largeur inférieure à 2 mm, et d'orientation générale transversale, ces incisions étant inclinée d'un angle moyen par rapport à une direction perpendiculaire à la surface de roulement de la bande à l'état neuf, cet angle moyen étant au moins égal à 5 degrés et orienté de façon que la force résultante exercée en roulage dans la zone de contact avec la chaussée par ladite chaussée sur la bande tende à redresser les incisions vers un angle moyen nul par rapport à cette même direction perpendiculaire.

Cette méthode d'optimisation consiste à fixer certains paramètres dimensionnels puis à rechercher les autres paramètres dimensionnels jusqu'à satisfaire les relations :

$$0,660 \langle Ai * Ac \langle 0,755$$

$$0,835 \langle \frac{Ai}{Ae} \langle 0,910$$

les coefficients *Ae, Ai* et *Ac* étant calculés, respectivement, pour chaque nervure épaule, chaque nervure intermédiaire et pour la nervure centrale, en utilisant les formules suivantes :

$$Aj = AXj * AYj$$

avec :

$$AXj = \frac{1}{1 + \frac{1}{3}\left(\frac{PSj}{pj - (EpLj + PLj * \tan ALPHAj)}\right)^2}$$

et

$$AYj = \frac{1}{1 + \frac{1}{3}\left(\frac{PSj}{Lrj}\right)^2}$$

l'indice j prenant la valeur c pour la nervure centrale, la valeur i pour chaque nervure intermédiaire, la valeur e pour chaque nervure épaule, et avec :

PSj : hauteur de la nervure d'indice j,

Lrj : largeur de la nervure d'indice j,

PLj : profondeur moyenne des incisions de la nervure d'indice j,

EpLj : largeur moyenne des incisions de la nervure d'indice j,

pj : pas moyen des incisions de la nervure d'indice j,

ALPHAj : angle d'inclinaison des incisions de la nervure d'indice j.

Grâce à la mise en oeuvre de cette optimisation, il est ainsi possible de déterminer une répartition des rigidités des différentes nervures épaule, intermédiaire et centrale en vue de mieux faire fonctionner la bande de roulement dans la mise à plat au contact de la chaussée pour que l'usure de cette bande soit homogène sur l'ensemble de la bande de roulement.

D'autres caractéristiques et avantages de l'invention ressortent de la description faite ci-après en référence aux dessins annexés qui montrent, à titre d'exemples non limitatifs, des variantes de réalisation de l'objet de l'invention.

*BRÈVE DESCRIPTION DES FIGURES*

La figure 1 montre une vue d'une bande de roulement selon l'invention ;

La figure 2 montre une vue partielle d'une nervure intermédiaire de la bande de roulement montrée à la figure 1 ;

La figure 3 montre une variante de pneu selon l'invention.

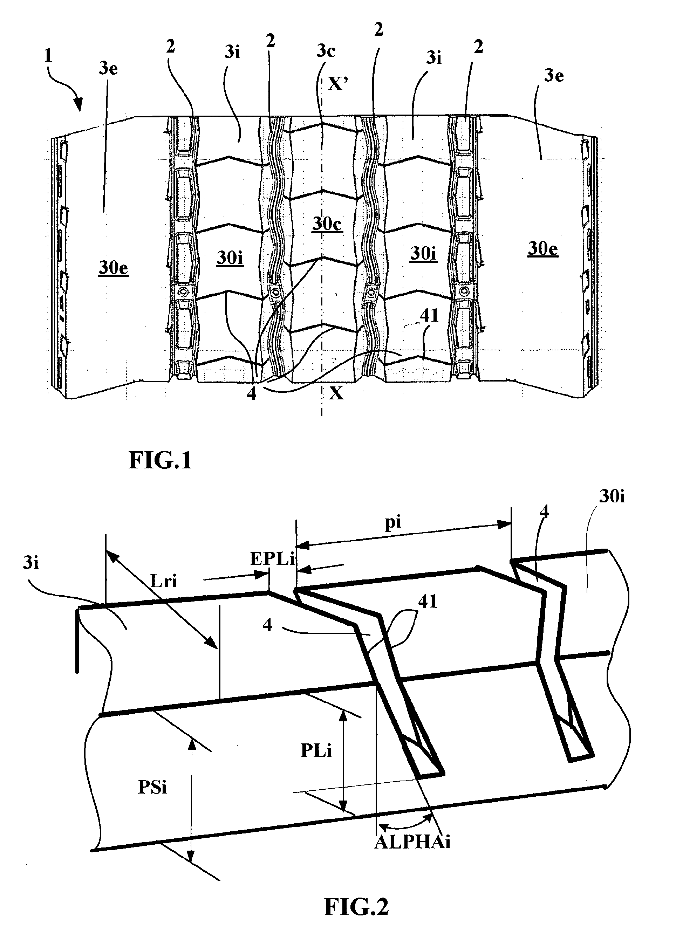

La figure 1 montre une vue d'une bande de roulement 1 selon l'invention destinée à faire partie d'un pneu de dimension 315/80 R22.5 lui même destiné à équiper l'essieu avant d'un véhicule poids lourd. Cette bande de roulement 1 comprend quatre rainures zigzagantes 2 orientées dans la direction longitudinale repérée par la direction XX' sur la figure (ou encore circonférentielle dès que cette bande est intégrée à un pneu). Ces rainures ont des profondeurs égales à 16.5 mm

Ces rainures 2 délimitent plusieurs nervures : une nervure épaule 3e à chaque bord latéral de la bande, une nervure médiane ou centrale 3c et une nervure intermédiaire 3i de chaque côté de la nervure centrale 3c. Chaque nervure 3j (l'indice j prenant les valeurs e, i ou c) comprend une face de contact 30j destinée à venir en contact avec une chaussée lors du roulage et des faces latérales coupant les faces de contact selon des arêtes.

La nervure médiane ou centrale 3c est localisée de manière à être traversée par un plan dit plan équatorial du pneu dont la trace sur le plan de la figure est indiquée par la ligne XX', ce plan équatorial étant perpendiculaire à l'axe de rotation et passant par ou sensiblement par les points à égale distance des bords latéraux de la bande (c'est-à-dire des arêtes axialement les plus à l'extérieur de la bande).

Dans le cas d'espèce, les nervures épaules 3e sont dépourvues de toute incision alors que les nervures centrales 3c et intermédiaires 3i sont pourvues chacune avec une pluralité d'incisions 4 dont les intersections avec les faces de contact de ces nervures forment des arêtes 41 en forme de V de même orientation. Par ailleurs, chaque incision 4 présente une inclinaison par rapport à un plan perpendiculaire à la surface de contact où s'ouvre ladite incision, cette inclinaison moyenne étant égale à 7 degrés. Ainsi la rigidité de la nervure épaule 3e n'est en rien réduite par la présence d'incisions et il est possible de réaliser un étagement des rigidités des nervures en allant de l'épaule (nervure la plus rigide) jusqu'à la nervure centrale.

Toutes les incisions 4 sont inclinées de la même manière de façon à ce que, en roulage, la force résultante exercée dans la zone de contact avec la chaussée par ladite chaussée sur la bande tend à redresser les incisions, c'est-à-dire de façon à diminuer l'inclinaison des incisions par rapport à cette même direction perpendiculaire. Il est connu que, sur un essieu directeur non moteur, la force moyenne résultante exercée par la chaussée sur la bande de roulement est une force dite « freineuse » c'est-à-dire une force tendant à s'opposer au déplacement du véhicule en roulage. Cette force freineuse est orientée dans un sens opposé au sens de déplacement du véhicule.

Ces incisions 4 ont une profondeur inférieure à la profondeur des rainures 2 comme cela est visible sur la figure 2 montrant une partie seulement d'une nervure intermédiaire 3i.

Sur cette figure 2, on distingue une partie seulement de la nervure intermédiaire 3i délimitée par les rainures longitudinales 2. Chaque incision 4 s'ouvre sur la face de contact 30i pour former deux arêtes 41. La profondeur PLi de chaque incision 4 est égale à 14.5 mm alors que la profondeur moyenne des rainures 2 qui délimitent cette nervure 3i est égale à 16.5 mm.

Ci-après sont rassemblées les données numériques pour cette bande de roulement selon l'invention :

PSc : hauteur nervure centre = 16.5 mm

PSi : hauteur nervure intermédiaire = 16.5 mm

PSe : hauteur nervure épaule = 16 mm

Lrc : largeur nervure centre = 32 mm

Lri : largeur nervure intermédiaire = 32 mm

Lre : largeur nervure épaule = 52 mm

EpLc : largeur moyenne des incisions sur la nervure centrale = 0.6 mm

EpLi : largeur moyenne des incisions sur la nervure intermédiaire = 0.6 mm

PLc : profondeur moyenne des incisions sur la nervure centrale = 14.5 mm

PLi : profondeur moyenne des incisions sur la nervure intermédiaire = 14.5 mm

PLe : profondeur moyenne des incisions sur la nervure = 0 mm (il n'y a pas d'incisions sur la nervure épaule)

pc : pas des incisions sur la nervure centrale = 35 mm

pi : pas des incisions sur la nervure intermédiaire = 35 mm

pe : pas des incisions sur la nervure épaule = 3000 mm

Par convention, lorsqu'une nervure est dépourvue de toute incision, la valeur de ce paramètre « pe » est égale au périmètre de ladite nervure.

ALPHAc : angle moyen d'inclinaison des incisions sur la nervure centrale = 7 degrés

ALPHAi : angle moyen d'inclinaison des incisions sur la nervure intermédiaire = 7 degrés

ALPHAe : angle moyen d'inclinaison des incisions sur la nervure épaule = 0 degré

Avec ces valeurs de paramètres, on obtient alors les coefficients :

AXc = 0.921

AYc = 0.919

AXi = 0.921

AYi = 0.919

AXe = 1.00

AYe = 0.969

Ai = 0.846

Ac = 0.846

Ae = 0.969

Ces valeurs conduisent à :

Ai*Ac = 0.716

Ai/Ae = 0.873

Ai*Ae = 0.821

Ces valeurs satisfont effectivement aux critères préconisés par l'invention, à savoir :

$$0,660 \langle Ai * Ac = 0.716 \langle 0,755$$

$$0,835 \langle \frac{Ai}{Ae} = 0.873 \langle 0,910$$

$$0,780 \langle Ai * Ae = 0.821 \langle 0,845$$

Pour un pneu de référence, dont le dessin de la sculpture de la bande de roulement est tel que montré à la figure 2 du document de l'art antérieur EP-0384182-B1 considéré comme l'art antérieur le plus proche de la présente invention, on a les valeurs indiquées ci après pour une même dimension de pneu (315/80 R22.5).

PSc : hauteur nervure centre = 17.5 mm

PSi : hauteur nervure intermédiaire = 17.5 mm

PSe : hauteur nervure épaule = 17.5 mm

PLc = 14.5 mm

PLi = 14.5 mm

PLe = 0 mm

Lrc : largeur nervure centre = 32 mm

Lri : largeur nervure intermédiaire la plus proche de la nervure épaule = 32 mm

Lre : largeur nervure épaule = 50 mm

EpLc : largeur moyenne des incisions sur la nervure centrale = 0.6 mm

EpLi : largeur moyenne des incisions sur la nervure intermédiaire = 0.6 mm

EpLe : largeur moyenne des incisions sur la nervure épaule = 0 mm

pc : pas des incisions sur la nervure centrale = 27 mm

pi : pas des incisions sur la nervure intermédiaire = 27 mm

pe : pas des incisions sur la nervure épaule = 3000 mm

ALPHAc : angle moyen d'inclinaison des incisions sur la nervure centrale = 7 degrés

ALPHAi : angle moyen d'inclinaison des incisions sur la nervure intermédiaire = 7 degrés

ALPHAe : angle moyen d'inclinaison des incisions sur la nervure épaule = 0 degré

Valeur des coefficients :

AXc = 0.856

AYc = 0.909

AXi = 0.856

AYi = 0.909

AXe = 1.00

AYe = 0.961

Ai = 0.778

Ac = 0.778

Ae = 0.961

Ai*Ac = 0.606

Ai/Ae = 0.810

Ai*Ae = 0.758

$$0,660 \langle Ai * Ac = 0.606 \ \langle 0,755$$

$$0,835 \langle \frac{Ai}{Ae} = 0.810 \ \langle 0,910$$

$$0,780 \langle Ai * Ae = 0.758 \ \langle 0,845$$

Comme on peut le constater, les valeurs obtenues pour le pneu de l'art antérieur le plus proche sont très nettement en dehors des plages revendiquées ici.

Dans les formules précédentes, l'opérateur « * » indique une opération de multiplication et l'opérateur « / » celui d'une opération de division.

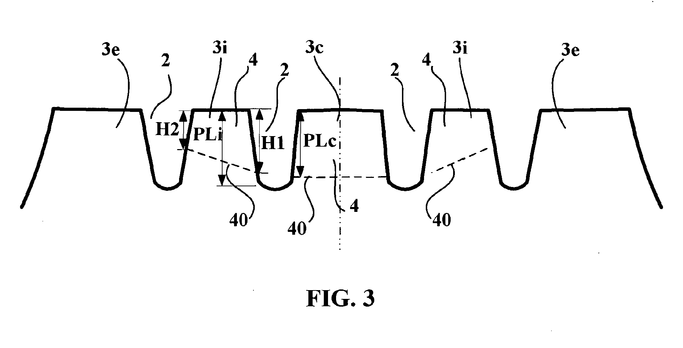

La figure 3 montre une variante de pneu selon l'invention selon laquelle la bande de roulement de ce pneu destiné à un véhicule poids lourd comprend deux nervures intermédiaires (3i) délimitées par des rainures (2) circonférentielles, une nervure centrale (3c), et deux nervures épaule (3e) délimitant axialement ladite bande. Chaque nervure intermédiaire est de hauteur PSi correspondant à la profondeur des rainures (2) délimitant cette nervure. D'autre part, chaque nervure intermédiaire (3i) est pourvue avec une pluralité d'incisions 4, chaque incision 4 ayant un fond d'incision 40 qui est incliné par rapport à une direction transversale. Ainsi chaque incision 4 présente une profondeur non uniforme entre les deux faces latérales de la nervure intermédiaire. Sur le côté correspondant à la rainure délimitée par la nervure intermédiaire et par la nervure épaule, la profondeur H1 de l'incision est de l'ordre de 60% de la hauteur PLi de la nervure intermédiaire tandis que sur l'autre côté la profondeur H2 de la même incision est égale à 80% de la même hauteur PSi.

Dans ce cas particulier, le calcul des coefficients *Ae, Ai* et *Ac* est fait en employant pour profondeur PLi des incisions de chaque nervure intermédiaire une valeur moyenne calculée en faisant la moyenne des profondeurs H1 et H2 (c'est-à-dire PLi = H1/2+H2/2). Enfin la nervure centrale 3c est pourvue avec des incisions dont la profondeur PLc est constante et légèrement supérieure à la profondeur maximale des incisions des nervures intermédiaires.

L'invention ayant été décrite de manière générale et au moyen de quelques variantes, il doit être compris que cette invention n'est pas limitée à ces seules variantes décrites et représentées. Il est clair que diverses modifications peuvent y être apportées sans sortir du cadre général de la présente invention, tel que défini par les revendications suivantes.

Dans tous les cas présentés, la personne du métier est à même d'adapter la forme de chaque incision, notamment en prévoyant la présence de moyens aptes à limiter les déplacements relatifs d'une face par rapport à la face en vis-à-vis (par exemple en prévoyant la formation de reliefs interagissant entre eux pour limiter voire bloquer tout mouvement relatif des faces dans au moins une direction). Il est aussi possible de pourvoir les parties des incisions les plus à l'intérieur de la bande avec des élargissements pour limiter les concentrations d'effort et ainsi réduire les possibilités de fissuration du matériau.

## Revendications

1. Bande de roulement (1) pour pneumatique destiné à équiper un essieu d'un véhicule poids lourd, ce pneumatique comportant une armature de carcasse radiale surmontée d'une armature de sommet, cette bande (1) comprenant au moins quatre rainures (2) d'orientation générale circonférentielle délimitant une pluralité de nervures (3e, 3i, 3c) comprenant deux nervures épaule (3e) délimitant axialement la bande et des nervures intermédiaires (3i) ainsi qu'une nervure centrale (3c), les nervures intermédiaires et centrale étant pourvues chacune avec une pluralité d'incisions (4) ayant une largeur inférieure à 2 mm, et d'orientation générale transversale, ces incisions (4) étant inclinées d'un angle moyen par rapport à une direction perpendiculaire à la surface de roulement de la bande à l'état neuf, cet angle moyen étant au moins égal à 5 degrés et orienté de façon que la force résultante exercée en roulage dans la zone de contact avec la chaussée par ladite chaussée sur la bande tende à redresser les incisions vers un angle moyen nul par rapport à cette même direction perpendiculaire, cette bande de roulement étant **caractérisée en ce que** les relations suivantes sont satisfaites :

$$0,660 \langle Ai * Ac \langle 0,755$$

$$0,835 \langle \frac{Ai}{Ae} \langle 0,910$$

les coefficients *Ae, Ai* et *Ac* étant calculés, respectivement, pour chaque nervure épaule, chaque nervure intermédiaire et pour la nervure centrale, en utilisant les formules suivantes :

$$Aj = AXj * AYj$$

avec :

$$AXj = \frac{1}{1 + \frac{1}{3}\left(\dfrac{PSj}{pj - (EpLj + PLj * \tan ALPHAj)}\right)^2}$$

et

$$AYj = \cfrac{1}{1 + \cfrac{1}{3}\left(\cfrac{PSj}{Lrj}\right)^2}$$

l'indice j prenant la valeur c pour la nervure centrale, la valeur i pour chaque nervure intermédiaire, la valeur e pour chaque nervure épaule, et avec :

PSj : hauteur de la nervure d'indice j,
Lrj : largeur de la nervure d'indice j,
PLj : profondeur moyenne des incisions de la nervure d'indice j,
EpLj : largeur moyenne des incisions de la nervure d'indice j,
pj : pas moyen des incisions de la nervure d'indice j,
ALPHAj : angle d'inclinaison des incisions de la nervure d'indice j.

2. Bande de roulement selon la revendication 1 **caractérisée en ce qu'**en outre la relation suivante est satisfaite :

$$0,780\langle Ai * Ae \langle 0,845$$

3. Bande de roulement selon la revendication 1 ou la revendication 2 **caractérisée en ce que** le pas des incisions (4) sur chaque nervure va en diminuant en allant des nervures épaules à la nervure centrale.

4. Bande de roulement selon l'une des revendications 1 à 3 **caractérisée en ce que** la largeur moyenne des incisions (4) augmente en allant de chaque nervure épaule (3e) vers la nervure centrale (3c).

5. Bande de roulement selon l'une des revendications 1 à 4 **caractérisée en ce que** les nervures épaule (3e) sont dépourvues d'incisions.

6. Bande de roulement selon l'une des revendications 1 à 5 **caractérisée en ce que** les incisions (4) de chaque nervure intermédiaire (3i) ont des profondeurs qui varient entre une profondeur maximale et une profondeur minimale, la profondeur minimale étant au moins égale à 55% de la hauteur PSi de la nervure.

7. Bande de roulement selon la revendication 6 **caractérisée en ce que** la profondeur minimale des incisions de chaque nervure intermédiaire est située du côté de la rainure délimitant la nervure épaule 3(e).

8. Bande de roulement selon l'une des revendications 1 à 7 **caractérisée en ce que** cette bande équipe un pneumatique destiné à équiper l'essieu avant directeur d'un véhicule poids lourd.

9. Méthode d'optimisation d'une bande de roulement pour pneu destiné à un essieu directeur d'un véhicule poids lourd selon laquelle on construit une bande de roulement avec au moins quatre rainures d'orientation circonférentielle délimitant une pluralité de nervures comprenant deux nervures épaule délimitant axialement la bande et des nervures intermédiaires ainsi qu'une nervure centrale, les nervures intermédiaires et centrale étant pourvues chacune avec une pluralité d'incisions ayant une largeur inférieure à 2 mm, et d'orientation générale transversale, ces incisions étant inclinée d'un angle moyen par rapport à une direction perpendiculaire à la surface de roulement de la bande à l'état neuf, cet angle moyen étant au moins égal à 5 degrés et orienté de façon que la force résultante exercée en roulage dans la zone de contact avec la chaussée par ladite chaussée sur la bande tende à redresser les incisions vers un angle moyen nul par rapport à cette même direction perpendiculaire, cette méthode d'optimisation consistant à fixer certains paramètres dimensionnels puis à rechercher les autres paramètres dimensionnels jusqu'à satisfaire les relations :

$$0,660\langle Ai * Ac \langle 0,755$$

$$0,835 \langle \frac{Ai}{Ae} \langle 0,910$$

les coefficients *Ae, Ai* et *Ac* étant calculés, respectivement, pour chaque nervure épaule, chaque nervure intermédiaire et pour la nervure centrale, en utilisant les formules suivantes :

$$Aj = AXj * AYj$$

avec :

$$AXj = \cfrac{1}{1 + \cfrac{1}{3}\left( \cfrac{PSj}{pj - (EpLj + PLj * \tan ALPHAj)} \right)^2}$$

et

$$AYj = \cfrac{1}{1 + \cfrac{1}{3}\left( \cfrac{PSj}{Lrj} \right)^2}$$

l'indice j prenant la valeur c pour la nervure centrale, la valeur i pour chaque nervure intermédiaire, la valeur e pour chaque nervure épaule, et les paramètres dimensionnels étant choisis dans la liste ci-après :

    PSj : hauteur de la nervure d'indice j,
    Lrj : largeur de la nervure d'indice j,
    PLj : profondeur moyenne des incisions de la nervure d'indice j,
    EpLj : largeur moyenne des incisions de la nervure d'indice j,
    pj : pas moyen des incisions de la nervure d'indice j,
    ALPHAj : angle d'inclinaison des incisions de la nervure d'indice j.

## Patentansprüche

1. Laufstreifen (1) für einen Reifen, der dazu bestimmt ist, auf einer Achse eines Schwerlastwagens angebracht zu werden, wobei dieser Reifen eine radiale Karkassenbewehrung aufweist, über der eine Scheitelbewehrung angebracht ist, wobei dieser Laufstreifen (1) wenigstens vier allgemein in Umfangsrichtung ausgerichtete Rillen (2) aufweist, die mehrere Rippen (3e, 3i, 3c) begrenzen, zu denen zwei Schulterrippen (3e), die den Laufstreifen axial begrenzen, und Zwischenrippen (3i) sowie eine Mittelrippe (3c) gehören, wobei die Zwischenrippen und die Mittelrippe jeweils mit mehreren Einschnitten (4) versehen sind, die eine Breite von weniger als 2 mm aufweisen und im Wesentlichen quer ausgerichtet sind, wobei diese Einschnitte (4) unter einem mittleren Winkel in Bezug auf eine Richtung geneigt sind, die zu der Lauffläche des Laufstreifens im neuen Zustand senkrecht ist, wobei dieser mittlere Winkel mindestens 5 Grad beträgt und derart ausgerichtet ist, dass die resultierende Kraft, die beim Rollen in dem Kontaktbereich mit der Fahrbahn durch diese Fahrbahn auf den Laufstreifen ausgeübt wird, bestrebt ist, die Einschnitte zu einem mittleren Winkel null hin in Bezug auf dieselbe senkrechte Richtung geradezurichten, wobei dieser Laufstreifen **dadurch gekennzeichnet ist, dass** die folgenden Beziehungen erfüllt sind:

$$0,660 < Ai * Ac < 0,755$$

$$0,835 < \frac{Ai}{Ae} < 0,910$$

wobei die Koeffizienten *Ae*, *Ai* und *Ac* für jede Schulterrippe, jede Zwischenrippe bzw. für die Mittelrippe unter Verwendung der folgenden Formeln berechnet werden:

$$Aj = AXj * AYj$$

mit:

$$AXj = \frac{1}{1 + \frac{1}{3}\left(\frac{PSj}{pj - (EpLj + PLj * \tan ALPHAj)}\right)^2}$$

und

$$AYj = \frac{1}{1 + \frac{1}{3}\left(\frac{PSj}{Lrj}\right)^2}$$

wobei der Index j den Wert c für die Mittelrippe, den Wert i für jede Zwischenrippe, den Wert e für jede Schulterrippe annimmt, und mit:

PSj: Höhe der Rippe mit dem Index j,
Lrj: Breite der Rippe mit dem Index j,
PLj: mittlere Tiefe der Einschnitte der Rippe mit dem Index j,
EpLj: mittlere Breite der Einschnitte der Rippe mit dem Index j,
pj: mittlerer Abstand der Einschnitte der Rippe mit dem Index j,
ALPHAj: Neigungswinkel der Einschnitte der Rippe mit dem Index j.

2. Laufstreifen nach Anspruch 1, **dadurch gekennzeichnet, dass** außerdem die folgende Beziehung erfüllt ist:

$$0,780 < Ai * Ae < 0,845$$

3. Laufstreifen nach Anspruch 1 oder Anspruch 2, **dadurch gekennzeichnet, dass** der Abstand der Einschnitte (4) in den einzelnen Rippen von den Schulterrippen zur Mittelrippe hin immer kleiner wird.

4. Laufstreifen nach einem der Ansprüche 1 bis 3, **dadurch gekennzeichnet, dass** sich die mittlere Breite der Einschnitte (4) von jeder Schulterrippe (3e) zu der Mittelrippe (3c) hin immer mehr vergrößert.

5. Laufstreifen nach einem der Ansprüche 1 bis 4, **dadurch gekennzeichnet, dass** die Schulterrippen (3e) nicht mit Einschnitten versehen sind.

6. Laufstreifen nach einem der Ansprüche 1 bis 5, **dadurch gekennzeichnet, dass** die Einschnitte (4) jeder Zwischenrippe (3i) Tiefen aufweisen, welche zwischen einer maximalen Tiefe und einer minimalen Tiefe variieren, wobei die minimale Tiefe mindestens 55 % der Höhe PSi der Rippe beträgt.

7. Laufstreifen nach Anspruch 6, **dadurch gekennzeichnet, dass** sich die minimale Tiefe der Einschnitte jeder Zwischenrippe auf der Seite der Rille befindet, welche die Schulterrippe (3e) begrenzt.

8. Laufstreifen nach einem der Ansprüche 1 bis 7, **dadurch gekennzeichnet, dass** mit diesem Laufstreifen ein Reifen ausgestattet ist, der dazu bestimmt ist, auf der Lenkvorderachse eines Schwerlastwagens angebracht zu werden.

9. Verfahren zur Optimierung eines Laufstreifens für einen Reifen, der für eine Lenkachse eines Schwerlastwagens bestimmt ist, gemäß dem ein Laufstreifen mit wenigstens vier in Umfangsrichtung ausgerichteten Rillen hergestellt wird, die mehrere Rippen begrenzen, zu denen zwei Schulterrippen, die den Laufstreifen axial begrenzen, und Zwischenrippen sowie eine Mittelrippe gehören, wobei die Zwischenrippen und die Mittelrippe jeweils mit mehreren Einschnitten versehen sind, die eine Breite von weniger als 2 mm aufweisen und im Wesentlichen quer ausgerichtet sind, wobei diese Einschnitte unter einem mittleren Winkel in Bezug auf eine Richtung geneigt sind, die zu der Lauffläche des Laufstreifens im neuen Zustand senkrecht ist, wobei dieser mittlere Winkel mindestens 5 Grad beträgt und derart ausgerichtet ist, dass die resultierende Kraft, die beim Rollen in dem Kontaktbereich mit der Fahrbahn durch diese Fahrbahn auf den Laufstreifen ausgeübt wird, bestrebt ist, die Einschnitte zu einem mittleren Winkel null hin in Bezug auf dieselbe senkrechte Richtung geradezurichten, wobei dieses Optimierungsverfahren darin besteht, gewisse Maßparameter festzulegen und danach die anderen Maßparameter zu suchen, bis die folgenden Beziehungen erfüllt sind:

$$0,660 < Ai * Ac < 0,755$$

$$0,835 < \frac{Ai}{Ae} < 0,910$$

wobei die Koeffizienten *Ae*, *Ai* und *Ac* für jede Schulterrippe, jede Zwischenrippe bzw. für die Mittelrippe unter Verwendung der folgenden Formeln berechnet werden:

$$Aj = AXj * AYj$$

mit:

$$AXj = \cfrac{1}{1 + \cfrac{1}{3}\left(\cfrac{PSj}{pj - (EpLj + PLj * \tan ALPHAj)}\right)^2}$$

und

$$AYj = \cfrac{1}{1 + \cfrac{1}{3}\left(\cfrac{PSj}{Lrj}\right)^2}$$

wobei der Index j den Wert c für die Mittelrippe, den Wert i für jede Zwischenrippe und den Wert e für jede Schulterrippe annimmt, und wobei die Maßparameter aus der nachfolgenden Liste ausgewählt werden:

PSj: Höhe der Rippe mit dem Index j,
Lrj: Breite der Rippe mit dem Index j,
PLj: mittlere Tiefe der Einschnitte der Rippe mit dem Index j,
EpLj: mittlere Breite der Einschnitte der Rippe mit dem Index j,
pj: mittlerer Abstand der Einschnitte der Rippe mit dem Index j,
ALPHAj: Neigungswinkel der Einschnitte der Rippe mit dem Index j.

**Claims**

1. Tread (1) for a tyre designed to be fitted to an axle of a heavy goods vehicle, this tyre comprising a radial carcass reinforcement surmounted by a crown reinforcement, this tread (1) comprising at least four grooves (2) of generally circumferential orientation delimiting a plurality of ribs (3e, 3i, 3c) comprising two shoulder ribs (3e) axially delimiting the tread and intermediate ribs (3i) and a central rib (3c), the intermediate and central ribs each being provided with a plurality of sipes (4) having a width of less than 2 mm, and of generally transverse orientation, these sipes (4) being inclined at an average angle relative to a direction perpendicular to the running surface of the tread in the new state, this average angle being at least equal to 5 degrees and oriented such that the resultant force exerted, when running in the zone of contact with the road surface, by the said road surface on the tread tends to straighten out the sipes towards an average zero angle relative to this same perpendicular direction, this tread being **characterized in that** the following relations are satisfied:

$$0.660 \langle Ai * Ac \langle 0.755$$

$$0.835 \langle \frac{Ai}{Ae} \langle 0.910$$

the coefficients *Ae, Ai* and *Ac* being calculated, respectively for each shoulder rib, each intermediate rib and for the central rib, by using the following formulas:

$$Aj = AXj * AYj$$

where:

$$AXj = \cfrac{1}{1 + \cfrac{1}{3}\left(\cfrac{PSj}{pj - (EpLj + PLj * \tan ALPHAj)}\right)^2}$$

and

$$AYj = \cfrac{1}{1+\cfrac{1}{3}\left(\cfrac{PSj}{Lrj}\right)^2}$$

the index j taking the value c for the central rib, the value i for each intermediate rib, the value e for each shoulder rib, and where:

PSj: height of the rib of index j,
Lrj: width of the rib of index j,
PLj: average depth of the sipes of the rib of index j,
EpLj: average width of the sipes of the rib of index j,
pj: average pitch of the sipes of the rib of index j,
ALPHAj: angle of inclination of the sipes of the rib of index j.

2. Tread according to Claim 1, **characterized in that** the following relation is also satisfied:

$$0.780 \langle Ai * Ae \langle 0.845$$

3. Tread according to Claim 1 or Claim 2, **characterized in that** the pitch of the sipes (4) on each rib reduces as you go from the shoulder ribs to the central rib.

4. Tread according to one of Claims 1 to 3, **characterized in that** the average width of the sipes (4) increases as you go from each shoulder rib (3e) to the central rib (3c).

5. Tread according to one of Claims 1 to 4, **characterized in that** the shoulder ribs (3e) have no sipes.

6. Tread according to one of Claims 1 to 5, **characterized in that** the sipes (4) of each intermediate rib (3i) have depths which vary between a maximum depth and a minimum depth, the minimum depth being at least equal to 55% of the height PSi of the rib.

7. Tread according to Claim 6, **characterized in that** the minimum depth of the sipes of each intermediate rib is situated on the side of the groove delimiting the shoulder rib (3e).

8. Tread according to one of Claims 1 to 7, **characterized in that** this tread is on a tyre designed to be fitted to the front steering axle of a heavy goods vehicle.

9. Method for optimizing a tread for a tyre designed for a steering axle of a heavy goods vehicle according to which a tread is constructed with at least four grooves of circumferential orientation delimiting a plurality of ribs comprising two shoulder ribs axially delimiting the tread and intermediate ribs and a central rib, the intermediate and central ribs each being provided with a plurality of sipes having a width of less than 2 mm, and of generally transverse orientation, these sipes being inclined at an average angle relative to a direction perpendicular to the running surface of the tread in the new state, this average angle being at least equal to 5 degrees and oriented such that the resultant force exerted, when running in the zone of contact with the road surface, by the said road surface on the tread tends to straighten out the sipes towards an average zero angle relative to this same perpendicular direction, this optimization method consisting in setting certain dimensional parameters and then in finding the other dimensional parameters until the following relations are satisfied:

$$0.660 \langle Ai * Ac \langle 0.755$$

$$0.835 \langle \frac{Ai}{Ae} \langle 0.910$$

the coefficients *Ae, Ai* and *Ac* being calculated, respectively for each shoulder rib, each intermediate rib and for the central rib, by using the following formulas:

$$Aj = AXj * AYj$$

where

$$AXj = \frac{1}{1 + \dfrac{1}{3}\left(\dfrac{PSj}{pj - (EpLj + PLj * \tan ALPHAj)}\right)^2}$$

and

$$AYj = \frac{1}{1 + \dfrac{1}{3}\left(\dfrac{PSj}{Lrj}\right)^2}$$

the index j taking the value c for the central rib, the value i for each intermediate rib, the value e for each shoulder rib, and the dimensional parameters being chosen from the following list:

PSj: height of the rib of index j,
Lrj: width of the rib of index j,
PLj: average depth of the sipes of the rib of index j,
EpLj: average width of the sipes of the rib of index j,
pj: average pitch of the sipes of the rib of index j,
ALPHAj: angle of inclination of the sipes of the rib of index j.

**FIG.1**

**FIG.2**

**FIG. 3**

**EP 2 688 754 B1**

## RÉFÉRENCES CITÉES DANS LA DESCRIPTION

### Documents brevets cités dans la description

- WO 2002055324 A

- EP 0384182 B1